# EUROPEAN PATENT APPLICATION

(11) **EP 3 578 057 A1**
(43) Date of publication of application: **11.12.2019**
(21) Application number: 18175840.0
(22) Date of filing: 04.06.2018
(51) Int. Cl.: A23L 7/122, A23L 7/135, A23L 7/191, A23L 19/00, A23L 7/10

(54) **FRUIT FLAVOURED COMPOSITIONS FOR COATING FARINACEOUS FOOD MATERIAL, PROCESS FOR THEIR PREPARATION AND PRODUCTS COATED WITH THE COMPOSITION**

(71) Applicant: Gat Givat Haim Cooperative Society For Preservation of Agricultrual Products Ltd., 3898300 M.P. Hefer (IL)
(72) Inventor: GHENDER, Yuval, Raanana 4343423 (IL); MEDINI, Omer, M.P. Hefer P.O.B. 686 3953500 (IL); GAY, Amit, M.P. Hefer P.O.B. 395 3953500 (IL)
(74) Representative: Millburn, Julie Elizabeth

(57) **Abstract**

The present invention is directed to fruit flavored composition suitable for coating farinaceous food material comprising:
- 60-95 % of a fruit source
- 0.01-0.5% of an emulsifier
- 0.5-4 % of an oil;
- 2-5 % of dietary fibers, and
- 1% - 35 % potable or reverse osmosis water.

A dry fruit flavored ready-to-eat cereal coated with the composition and a process for preparing the coating are also described.

## Description

### TECHNOLOGICAL FIELD

Compositions of fruits or fruit ingredients used as additives to foods, processes for preparing sweetened and/or fruity flavor foods.

### BACKGROUND ART

References considered to be relevant as background to the presently disclosed subject matter are listed below:
- US 3,134,683
- US 4,880,645
- US 6,268,007
- US 6,287,621
- US 6,440,473
- CA 1334266

Acknowledgement of the above references herein is not to be inferred as meaning that these are in any way relevant to the patentability of the presently disclosed subject matter.

### BACKGROUND

Additives to foods include among others sweeteners and flavors. The source of such additives may be various types of natural or synthetic purely added sugars and/or flavors. Another source of additives to foods are fruit components, honey or similar sweeteners that have high levels of natural sugars. More particularly, in the field of sweetened farinaceous (made from, or rich in starch or flour) materials such as crackers, puffed cereals, direct expended extruded, cooked cereals (traditional cereals), cold/ pasta forming extrusion, direct extruded, pellet extruded, chips and snacks, the flavoring, frequently sweetened and/or fruity flavor additive may be embedded inside the product or may be added as a coating to the product. US 3,134,683 describes a process for the preparation of a dried fruit product having a crisp, tender texture comparable to breakfast cereal that is moisture equilibrium with cereals and thus can be incorporated with cereals for a combined consumption. US 4,880,645 describes ready-to-eat cereals that have an outer coating made up of a sweetening syrup made from reducing sugars and added pectin. US 6,268, 007 and US 6,440,473 describes a process for the manufacture of a coated product, where the base is made of extruded wheat, barley, maize, rice, flour, semolina, or mixtures thereof with water and the coating consists of sugar, honey, fruit or vegetable pulp or concentrate, functional fruit extracts and additives. US 6,287,621 describes sweetened extruded cereals containing pregelatinized high amylose starches. The cereals are prepared by extruding a mixture of cereal flour, one or more sweetener, high amylose starch or flour having a high amylose content at prescribed temperature and pressure and toasting the final extruded product. CA 1334266 describes sweetening a comestible such as a ready-to-eat cereal with a coating that comprises a sweetening syrup having up to 85 percent by weight reducing sugars that may originate from fruit and a pectin solution.

### GENERAL DESCRIPTION

The present invention is directed to fruit based compositions and their use for coating farinaceous (made from, or rich in starch or flour) based food materials for providing sweetened and/or fruity flavor additives to these food materials by coating. The composition used for coating comprising (wt/wt%):
- About 65-95% fruit source
- About 0.01 - 0.5% emulsifier
- About 0.5-4% oil;
- About 2-5% dietary fibers
- About 1-35% potable or reverse osmosis water.

The compositions according to the present invention may comprise up to 5% water, thereby comprising:
- about 85-95% fruit source
- about 0.05-1.5% emulsifier (preferably 0.2)
- about 0.5-1.5% oil
- about 2-5% dietary fiber
- up to 5% potable or reverse osmosis water.

Alternatively, the composition may be more diluted and comprise 25-35% water, thereby comprising:
- about 60-70 % fruit source
- about 0.1-3% emulsifier
- about 0.5-4% oil
- about 2-5% dietary fiber
- about 25-35% potable or reverse osmosis water.

The oil is preferably vegetable oil and optionally the amount of 4.0% oil may be composed of up to 0.5% essential oil, preferably up to 0.25%, most preferably, up to 0.2% essential oil and the remaining being vegetable oil. Thus the amount of the two oils are: 0 - 0.5% essential oil and 3.5-4.0% vegetable oil.

Optionally, flavoring are added, being selected from FTNF (From The Name Fruit) which are specific fruit flavor extracts that are derived exclusively from a specific fruit. Examples of such FTNF are boysenberry, Gooseberry, Guava and carambola, Indian totapuri for mango, aromatic sengana for strawberry, and sweet juicy Caribbean pineapple.

The compositions are aimed for coating the farinaceous, i.e. the starch- or flour-based material, after their preparation for ready to eat product, i.e. after cooking/extruding the ready-to-eat product.

In a further embodiment the present invention is directed to a fruit flavored ready-to-eat product, the flavoring achieved by coating with the composition of the present invention either a non-fruit flavored product or a product that is already fruit flavored thus enhancing or enriching its fruit flavor and preventing adhesive or clumping of the final coated product.

Fruit flavoring according to the present invention depends on the nature of the fruit used and therefore may be sweetened or non-sweetened flavoring such as lemon.

In a yet another embodiment the invention is directed to a process of coating the farinaceous, i.e. the starch- or flour-based material after their preparation for ready to eat product.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

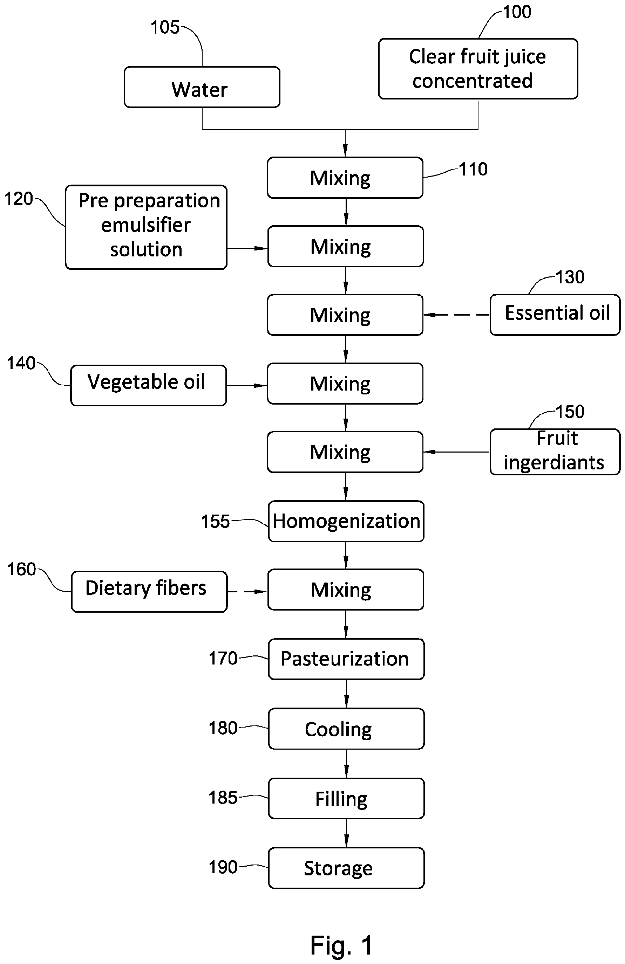

**Fig. 1** is a diagrammatical scheme representing the preparation of the fruit flavor composition for coating of the present invention. The various components are a combination of two solutions; the first is pre preparation of emulsifier solution which is combined with the other components that are added. The solution is homogenized, pasteurized, cooled, packed and store.

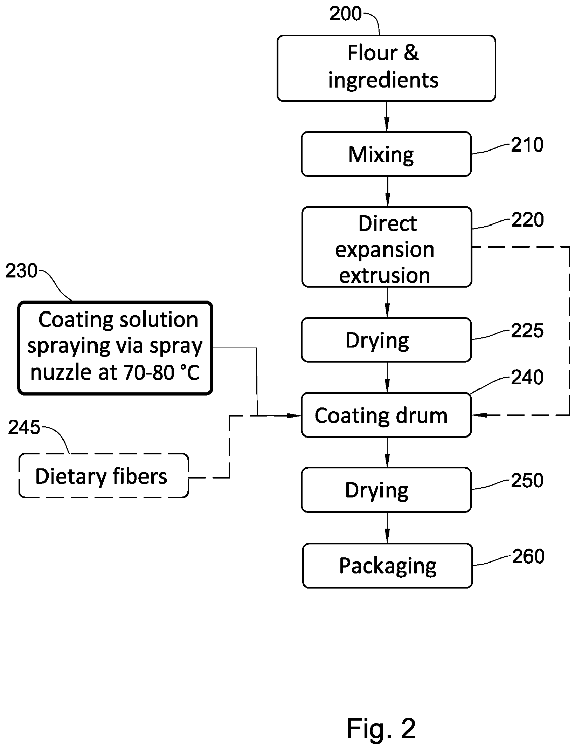

**Fig. 2** is a diagrammatical scheme representing the processes of coating the product with the composition of the present invention. The "coating solution" is sprayed on the surface of the "flake". The final product has a sweetened and/or fruity flavor and does not stick to each other.

### DETAILED DESCRIPTION OF EMBODIMENTS

The present invention is thus directed to a fruit based composition for coating farinaceous based, i.e. starch- or flour-based food material, a process for preparing the composition and processes for coating. The farinaceous based, i.e. starch- or flour-based food material is preferably cereals, commonly referred to as "breakfast cereals" that are made from corn, rice whole rice, wheat, whole wheat, oat, whole oat, barley and whole barley or their mixtures. The composition is composed of the source of fruit, emulsifier, oil that may include essential oil, dietary fibers and water. The invention is directed to the process of preparing the coating solution and to the final product having a fruity and/or sweetened taste. It may further comprise, preservatives, natural flavoring, essential oil and/or FTNF. Fibers are added in order to prevent tackiness and adhesiveness of the coated final product ("flaks" like), such that the final product contain single flaks that do not stick one to another even after long periods of storage thus forming lumps. The resulting product freely pours and further provides sweetens and/or fruity flavor.

The composition comprises one or more source of fruit for attributing the fruity flavoring. None limiting sources of fruit include fruit juice such as clear fruit juice, fruit concentrate and clear fruit concentrate, fruit ingredients such as cloudy peel extract or fruit juice fruit puree, fruit concentrate, pulp wash, core wash, peel extract, fruit cells, fruit comminute.

Fruit juice and concentrate is selected from apple, citrus, e.g. grapefruit, orange, tangerine, lemon, banana, strawberry, pineapple, pear, peach, etc. and combination thereof.

Non limiting examples of nutritional fibers are citrus fibers in particular, lemon, lime, orange, grapefruit, mandarins, acacia, bamboo.

Non limiting examples of emulsifiers are mono and diglycerides of fatty acid, Gum acacia etc. Ready-to-eat food product that may be flavored by the addition of the fruit based composition of the present invention is breakfast cereals that are based on farinaceous materials or snacks, in particular breakfast cereals.

The oil component is preferably vegetable oil where up to 0.5% of the composition may be essential oil, more preferably up to 0.25%, most preferably up to 0.2% essential oil.

Non limiting examples of farinaceous materials (made from, or rich in starch or flour) are flours made from corn, rice whole rice, wheat, whole wheat, oat, whole oat, barley and whole barley or their mixtures.

In particular, the fruit based composition is aimed to coat the breakfast cereals (cereal flours) forming a ready-to-eat sweetened and/or fruity flavored product.

It should be noted that ready-to-eat food coated product according to the invention may comprise a ready-to-eat product that is already sweetened and/or fruity flavored and the coating provides a freely flowing product, i.e. does not form lumps.

The process for coating the farinaceous based material (preferably cereal) according to the invention comprises: (i) obtaining a direct expansion extruded cereals product; (ii) spraying the extruded cereal product via spray nozzle; (iii) drying and storing the coated farinaceous based material. Alternately, the process for coating a farinaceous based material comprises: (i) obtaining a direct expansion extruded cereals product; (ii) spraying the extruded cereal product via spray nozzle; (iii) spreading dietary fibers over the coated farinaceous based material; and (iv) drying and storing the coated farinaceous based material.

The coating composition of the present invention is manufactured by the following process as depicted in **Figure 1****.** Clear fruit juice concentrate (**100**) is used as a carrier for all the other components. Water (**105**) are optionally added to the concentrated fruit juice (**200**) while being mixed in a mixer (**110**) at 200-500 RPM, followed by adding an emulsifier pre-mix (**120**). The emulsifier pre- mix is prepared as follow: a 1:1 water and fruit concentrate solution is prepared. The emulsifier pre- mix is prepared by mixing said 1:1 solution with the emulsifier in a 10:1 ratio. The 1:1 water fruit concentrate solution may be heated to 40-60°C prior to the addition of the emulsifier. Alternatively the emulsifier is added to the water: fruit concentrate solution and then the resulting solution is heated to 40-60°C. Preferably the heating is done prior to the addition of the emulsifier in order to prevent the formation of lumps. Continuing the mixing, vegetable oil (**140**) is added, where the oil content that is added may be composed of partially vegetable oil and partially essential oil (**130**). Optionally fruit ingredients are added (**150**). The solution is homogenized (**155**) in a two stage homogenizer, the first pressure is 150-250/bar and second 20-50/bar at ambient temperature. Optionally, after homogenization, dietary fibers without hydration, are added (**160**) to the solution. Alternatively the dietary fibers are added after coating the direct expanded extruded cereals (see figure 2 below). The components are then heated and pasteurized (**170**) at 85-95°C for a short period of time, about 10-60 seconds and cooled to 25-40°C (**180**). The final solution "ready to use" as a coating solution for spraying on the "flaks" surface is packaged (**185**) and is stored in (-18°C) or chilled 0-4°C or ambient (**190**).

Turning to **Figure 2****,** direct coating of a farinaceous (made from, or rich in starch or flour) food material, in particular, direct expansion extruded cereals is described. Thus, the general well known commercial process for preparing such direct expansion extruded cereals is the following; a mixture of flour, and starch (**200**) poured and mixed in a mixer (**210**). The mixture (**200**) undergoes direct expansion extrusion (**220**) and optional is dried (**225**) to yield a direct expansion extruded cereals product. A direct expanded extruded cereals formed by any modification or adjustment commercially available can also serve as the basis for the following process of coating. The resulting expanded extruded product is then coated with the fruit coating solution of the present application by spraying via spray nozzle at a temperature of 70-80°C (**230**) on a drum (**240**). Optionally powdered dietary fiber are spread (**245**) over the coated direct expanded extruded cereals. The coated product containing the dietary fiber is dried (**250**) and packaged (**260**) yielding the final sweetened and/or fruity flavor product.

The term "about" as used throughout the present application is understood as the indicated value having a range of ±10%.

### Examples

### Example No. 1- Apple based coating composition for coating farinaceous material:

950Kg Apple concentrate and 38 liters of water were mixed. A formulation comprising 2 g of E-471 emulsifier was prepared, heated to 40-60°C and added to the apple concentrate/water mixture. While being mixed, 10kg of vegetable oil was added. The combined mixture was homogenized in a two stage homogenizer, the first stage is set to a pressure of 160 bar and in second stage at 40 /bar at ambient temperature. After homogenization 30kg dietary fibers, were added. The components are then heated and pasteurized at 85-95°C for 40-45 seconds and cooled to 25-40°C. The final solution "ready to use" as a coating solution was packaged and stored at either (-18°C) or chilled 0-4°C.

### Example No. 2 Apple-orange based coating composition for coating farinaceous material:

950Kg Apple concentrate and 38 liters of water were mixed. A formulation comprising 2 kg of E-471 emulsifier was prepared, heated to 40-60°C and added to the apple concentrate/water mixture. While being mixed, 7.5kg of vegetable oil and 2.5kg orange essential oil were added. The combined mixture was homogenized in a two stage homogenizer, first stage under a pressure of 160 bar and second stage under a pressure of 40 bar at ambient temperature. After homogenization 30kg dietary fibers, are added. The components are then heated and pasteurized at 85-95°C for 40-45 seconds and cooled to 25-40°C. The final solution "ready to use" as a coating solution was packaged and stored at either (-18°C) or chilled 0-4°C.

### Example No. 3: Apple-Pineapple based coating composition for coating farinaceous material:

To 750Kg apple concentrate and 38 liters of water are mixed thoroughly. A pre-prepared emulsifier solution comprising 2kg of E-471 emulsifier was prepared, and added to the apple water mixture. While being mixed, 10kg of vegetable oil were added. 200kg of pineapple concentrate were added to the above mixture. The combined mixture was homogenized in a two stage homogenizer, first stage under a pressure of 160 bar and second stage under a pressure of 40 bar at ambient temperature. After homogenization 30kg dietary fibers were added. The components are then heated and pasteurized at 85-95°C for 40-45 seconds and cooled to 25-40°C. The final solution "ready to use" as a coating solution was packaged and stored at either (-18°C) or chilled 0-4°C.

### Example No. 4: Apple based coating composition for coating farinaceous material:

700Kg Apple concentrate and 288 liters of water were mixed. A formulation comprising 2kg of E-471 emulsifier was prepared, heated to 40-60°C and added to the apple concentrate/water mixture. While being mixed, 10kg of vegetable oil was added. The combined mixture was homogenized in a two stage homogenizer, the first stage is set to a pressure of 160 bar and in second stage at 40 bar at ambient temperature. After homogenization 30kg dietary fibers were added. The components are then heated and pasteurized at 85-95°C for 40-45 seconds and cooled to 25-40°C. The final solution "ready to use" as a coating solution was packaged and stored at either (-18°C) or chilled 0-4°C.

### Example No. 5: Apple-banana based coating composition for coating farinaceous material:

350Kg Apple concentrate were put into a mixing tank. A formulation comprising 2kg of E-471 emulsifier was prepared, heated to 40-60°C and added to the apple concentrate. While being mixed, 175Kg banana puree was added, thereafter 463 liter of water were added, followed by 10kg of vegetable oil. The combined mixture was homogenized in a two stage homogenizer, the first stage is set to a pressure of 160 bar and in second stage at 40 bar at ambient temperature. The components are then heated and pasteurized at 85-95°C for 40-45 seconds and cooled to 25-40°C. The final solution "ready to use" as a coating solution was packaged and stored at either (-18°C) or chilled 0-4°C. The final coated direct expanded extruded cereals are then spread with dietary fiber to contain 4.5Kg dietary fibers in the ready to eat cereal.

In a similar manner the following additional coating formulations were prepared: Pear +orange essential oil; pear + tangerine essential oil; apple + orange concentrate.

## Claims

1. Fruit flavored composition for coating farinaceous food material comprising:
- About 60-95 % fruit source
- About 0.01 - 0.5% emulsifier
- About 0.5-4 % oil;
- About 2-5 % dietary fibers
- 1% - 35 % potable or reverse osmosis water.

2. The fruit flavored composition of claim 1, comprising
- about 60-70 % fruit source
- about 0.1-3% emulsifier
- about 0.5-4% oil
- about 2-5% dietary fiber
- about 25-35% potable or reverse osmosis water.

3. The fruit flavored composition of claim 1, comprising
- about 85-95% fruit source
- about 0.05-1.5% emulsifier
- about 0.5-1.5% oil
- about 2-5% dietary fiber
- up to 5% potable or reverse osmosis water.

4. The fruit flavored composition according to any one of claims 1 to 3, wherein the fruit source is selected from fruit juice, clear fruit juice, fruit concentrate and clear fruit concentrate, fruit ingredients such as, fruit puree , pulp wash, core wash, peel extract, fruit cells, fruit comminute.

5. The fruit flavored composition according to any one of claims 1 to 4, wherein the oil is selected from 0-0.5% essential oil and 3.5-4% vegetable oil.

6. The fruit flavored composition according to any one of claims 1-5, wherein the nutritional fiber is selected from citrus fiber, acacia, bambusoideae, essential oil and vegetable oil selected from canola (rapeseed), soya, corn, and citrus.

7. The fruit flavored composition according to any one of claims 1-6, wherein the fruit juice is selected from apple, citrus, e.g. grapefruit, orange, tangerine, lemon, banana, strawberry, pineapple, pear, peach, etc. and combination thereof.

8. The fruit flavored composition according to any one of claims 1-7, wherein the farinaceous based material is flour made from the group comprising corn, rice whole rice, wheat, whole wheat, oat, whole oat, barley and whole barley.

9. The fruit flavored composition according to any one of claims 1-8, further comprising flavorings, preservatives, and/or fruit flavor extracts From The Name Fruit (FTNF).

10. A dry fruit flavored ready-to-eat cereal coated with the composition of any one of the preceding claims.

11. The dry fruit flavored ready-to-eat cereal according to claim 10 selected from cereals composed of corn, rice, whole rice, wheat, whole wheat, and oat, whole oat, barley, whole barley.

12. The dry fruit flavored ready-to-eat cereal of claim 10, wherein the ready-to-eat cereal is extruded, puffed, flaked cereal, cooked (traditional cereals), cold/pasta forming extrusion, direct extruded, pellet extruded.

13. The dry fruit flavored ready-to-eat cereal of claim 10, wherein the ready-to-eat cereal is fruit flavored.

14. A process for preparing a fruit flavored coating to farinaceous based material, comprising:
- Mixing fruit juice concentrate and water;
- Preparing an emulsifier solution and adding to the mixture;
- Adding oil while mixing;
- A two-step homogenization;
- Adding fibers;
- Pasteurization
- Cooling and storing the product.
